# EUROPEAN PATENT SPECIFICATION

(11) **EP 3 282 118 B1**
(45) Date of publication and mention of the grant of the patent: **18.11.2020**
(21) Application number: 17185528.1
(22) Date of filing: 09.08.2017
(51) Int. Cl.: F02M 51/00, F02M 53/02, F02M 53/06, F02M 31/125, F02M 69/46

(54) **FUEL INJECTION SYSTEM WITH FUEL HEATING DEVICE**
KRAFTSTOFFEINSPRITZANLAGE MIT KRAFTSTOFFHEIZEINRICHTUNG
SYSTÈME D'INJECTION DE CARBURANT AVEC DISPOSITIF DE CHAUFFAGE À CARBURANT

(30) Priority: 12.08.2016 BR 102016018530
(43) Date of publication of application: 14.02.2018
(73) Proprietor: Mahle International GmbH, 70376 Stuttgart (DE); Mahle Metal Leve S/A, 13210-877 Jundiaí, SP (BR)
(72) Inventor: AMARAL, Tadeu Miguel Malago, 02018-000 Sao Paulo (BR); DE AZEVEDO Junior, Edson Valdomiro, 13216-291 Jundiai, Sao Paulo, (BR); MOREIRA, Fabio, 13280-000 Vinhedo - SP (BR); JUN YOSHINO, Fernando, 13214-730 Jundiai-SP (BR)
(74) Representative: BRP Renaud & Partner mbB Rechtsanwälte Patentanwälte Steuerberater

(56) References cited:
- WO-A1-97/37121
- DE-A1-102012 220 432
- DE-A1-102012 220 433
- DE-A1-102014 215 434
- JP-A- 2010 101 294
- US-A- 4 713 524
- US-A- 4 866 250
- US-A1- 2015 300 300

## Description

The present invention relates to a fuel heating device for a fuel injection system of an internal combustion engine according to the preamble of claim 1. The invention, apart from this, relates to a fuel injection system for an internal combustion engine which is equipped with at least one such fuel heating device.

Internal combustion engines that inject fuel direct inside the combustion chamber, for instance gasoline direct injection (GDI) and diesel engines, have a very short fuel-air mixture time, what is critical for a good combustion and this causes high pollutant emissions (mainly particulate emissions). In order to avoid these problems and fulfil the more restrict emission legislations, direct fuel injection systems must provide technologies for decreasing the fuel droplet size after the injection. An effective way for decreasing the fuel droplet size is by means of efficient electric heating, subject of this invention. The fuel injection system in this case has a separate injector for each cylinder of the internal combustion engine for injecting the fuel into the cylinder. Practically, each injector is in this case assigned a separate fuel heating device. Because of this it is possible to preheat comparatively small fuel quantities and inject the preheated fuel directly into the cylinder via the respective injector. Because of this, the energy required for heating the fuel is minimized. At the same time, the time required for heating is reduced.

Fuel heating devices are known for example from US 2010/078507 A1, from US 6 109 543 and from US 2015/0300300 A1.

The known fuel heating devices have comparatively complex structures and/or are only suitable for low injection pressures. However, modern fuel injection systems operate with comparatively high fuel pressures. For example, the fuel can be fed to the individual injectors at a pressure of more than 20 bar. In the injectors, the pressure can then be increased to more than 500 bar.

A fuel heating device according to the preamble of claim 1 is known from US 2015/300300 A1.

The present invention deals with the problem of stating an improved embodiment for a fuel heating device of the type mentioned above or for a fuel injection system equipped with such, which is characterized by a comparatively simple structure and thus by reduced production costs. At the same time, the fuel heating device is intended to be suitable for comparatively high fuel pressures. Furthermore, as high as possible an energetic efficiency is aimed at.

According to the invention, this problem is solved through the subject matter of the independent claim. Advantageous embodiments are the subject matter of the dependent claims.

The invention is based on the general idea of equipping the fuel heating device with a pot-shaped housing, with a pot-shaped heat exchanger and with a heating element carrier. The pot-shaped, in particular cylindrical housing has a housing interior and has an inlet opening for liquid fuel and an outlet opening for liquid fuel. The pot-shaped housing is characterized by high pressure stability. The pot-shaped, in particular cylindrical, heat exchanger is inserted into the housing interior and on the outside has fins for directly transferring heat into the fuel. This means that the fins of the heat exchanger are directly in contact with the fuel to be heated during the operation of the fuel heating device. The heat exchanger on the inside has an exchanger interior. On its outside in conjunction with the fins, the pot-shaped heat exchanger has a very large surface area for efficiently transferring heat to or into the fuel. The heating element carrier is inserted into the exchanger interior and on the outside carries at least two flat and even PTC heating elements, wherein PTC stands for *positive temperature coefficient.* Apart from this, the heating element carrier has a contact spring arrangement, which preloads the PTC heating elements against the heat exchanger for the heat transfer and in the process forms a first pole for the power supply of the PTC heating elements. A second pole for the power supply can be formed in this case by the heat exchanger itself, which is practically produced from a metal. By using a heating element carrier which is arranged in the interior of the heat exchanger, a heat flow from the inside to the outside can be generated during the operation of the fuel heating device in conjunction with the PTC heating elements, as a result of which the heat exchanger is particularly efficiently heated. Advantageous here is in particular the fact that the heat cannot flow to the inside but out of necessity has to flow to the outside so that the heat generated with the help of the PTC heating elements enters the heat exchanger with high efficiency.

Furthermore, an exchanger lid for axially closing the exchanger interior is provided, through which a terminal lug of the contact spring arrangement is axially fed through. By way of this terminal lug, the previously mentioned first pole can be connected to a power supply. To this end, the respective fuel heating device is additionally equipped with an electrical connection which is attached to the exchanger lid and via which the fuel heating device can be connected to a power supply. To this end, the mentioned terminal lug projects into the electrical connection.

Furthermore, a housing lid for axially closing the housing is practically provided, through which the exchanger lid is axially fed through and which is screwed to the housing. The screw connection between housing lid and housing allows high pressures in the housing and thus in the fuel. Altogether, the fuel heating device introduced here has a comparatively simple structure which can be correspondingly cost-effectively realized, a high energetic efficiency and comparatively high pressures in the fuel being realizable at the same time. Particularly advantageously, the heating element carrier can be configured so that two or more PTC heating elements can be attached to the same. Conceivable is for example a rectangular cross section with four PTC heating elements or a hexagonal cross section with six PTC heating elements.

The flat and even configuration of the PTC heating elements makes possible a particularly cost-effective production of the PTC heating elements, which ultimately also reduces the costs for the fuel heating device. Practically, the PTC heating elements can be configured rectangular-shaped with rectangular cross sections. The flat configuration of the PTC heating elements in this case is effected in such a manner that the PTC heating elements are dimensioned relatively small in a thickness direction while they are dimensioned relatively large in a width direction and in a height direction compared with the thickness direction. Heat transport during the operation of the respective PTC heating element takes place in the thickness direction. In the pot-shaped heat exchanger, the thickness direction is substantially oriented radially. The width direction, which is at least twice or at least five times greater than the thickness direction, in this case extends in the circumferential direction with respect to the pot-shaped heat exchanger, but in a straight line. The height direction of the respective PTC heating element is practically greater than the width direction and extends in the pot-shaped heat exchanger substantially axially.

According to the invention, in the housing interior a pot-shaped insulator is additionally arranged. Here, the insulator encloses an insulator interior into which the heat exchanger is inserted. The insulator on the outside directly lies against the housing while on the inside it directly lies against the heat exchanger or the fins of the same. With the help of the insulator, which acts in a thermally insulating and in particular also electrically insulating manner, a heat transfer to the housing is reduced, which improves the heat input into the fuel. Furthermore, a heating space, through which fuel flows during the operation of the fuel heating device and in which the heat-transferring coupling to the heat exchanger takes place, is substantially reduced to fin intermediate spaces. Because of this, an extremely efficient heat transfer is realized which additionally makes possible a relatively rapid heating of the fuel.

According to a further development, the insulator with a projection can extend as far as into the outlet opening of the housing. In this projection, the insulator can contain an outlet duct through which a heating space is fluidically connected to the outlet opening. In this heating space fins of the heat exchanger are located. In this way, a direct contact of the heated fuel with the housing can be avoided, which increases the efficiency of the fuel heating device.

Another further development proposes that axially between an exchanger bottom of the pot-shaped heat exchanger and an insulator bottom of the pot-shaped insulator a gap is formed. This gap is likewise part of the heating space through which fuel flows during the operation of the fuel heating device. By way of the insulator bottom, this gap is thermally shielded relative to a housing bottom. The loss of heat can thereby be reduced.

Another further development proposes that outside on the heat exchanger at least one longitudinal groove is formed, which is fluidically connected to the inlet opening. During the operation of the fuel heating device, fuel from the longitudinal groove can spread to fin intermediate spaces. In this respect, this longitudinal groove serves as inlet groove or as distributor groove. In conjunction with this inlet groove, a defined flow of fuel through the heating space is realized, which increases the efficiency of the heat transfer.

Another further development proposes that outside on the heat exchanger at least one longitudinal groove is formed, which is fluidically connected to the gap. During the operation of the fuel heating device, fuel from fin intermediate spaces can collect in this longitudinal groove and therein flow to the gap. By way of the gap or through the gap, the fuel then reaches the outlet duct. In this respect, this longitudinal groove can be referred to as outlet groove or collector groove. Practically, the collector groove is arranged diametrically opposite the distributor groove. This longitudinal groove also supports a targeted flow control within the heating space, which improves the heat transfer.

Another embodiment proposes that the exchanger lid is axially inserted into the heat exchanger. Here, the exchanger lid has an axial front side, which is axially supported on an annular step formed on the heat exchanger. Furthermore, the exchanger lid is equipped with a radially projecting collar circulating in the circumferential direction. The dimensions of the exchanger lid and heat exchanger are then coordinated so that axially between the collar of the exchanger lid and an axial front side of the heat exchanger a ring seal is arranged, which radially supports itself on the housing. Because of this, the heating space can be efficiently sealed. The ring seal is preferentially an O-ring.

Another embodiment proposes that on or in the heat exchanger a covering cap is arranged, which axially covers the heating element carrier, the contact spring arrangement and the PTC heating elements. The terminal lug of the contact spring arrangement is axially fed through this covering cap. Furthermore, the covering cap is axially supported on the exchanger lid. With the help of this covering cap, the assembly of the fuel heating device is simplified. The covering cap ensures a secure and predetermined positioning of the heating element carrier and thus of the PTC heating elements in the heat exchanger.

According to a further development, the covering cap can be supported on the heat exchanger via a cone. Because of this, a particularly efficient positioning or centring of the cover cap on the heat exchanger can be realized.

The covering cap, the electrical connection and the heating element carrier are practically separate components. At least one of these components can be produced from plastic. Practically, all these components are produced from plastic. The heat exchanger, the housing, the exchanger lid and the housing lid can practically be separate components. At least one of these components is produced from metal. Practically, all these components are each produced from metal. Here, different metals or metal alloys can be employed.

Advantageously, the housing lid can be captively and moveably arranged axially between the electrical connection and the exchanger lid. Because of this, a preassembled assembly can be particularly easily realized which can be particularly easily inserted into the housing and fastened thereon with the help of the housing lid. The housing lid is in this case axially adjustably and rotatably arranged on the exchanger lid or on the electrical connection, so that the heat exchanger with exchanger lid and electrical connection can be completely inserted into the housing and subsequently fixed thereon by screwing to the housing lid.

Another embodiment proposes that the electrical connection consists of plastic and is injection moulded onto the metallic exchanger lid. Injection moulding the electrical connection onto the exchanger lid is practically effected after the housing lid has been placed on the exchanger lid. Furthermore it is conceivable to injection mould the electrical connection on in particular when the exchanger lid has already been attached to the heat exchanger. As a consequence, the electrical connection can also be injection moulded onto the terminal lug of the contact spring arrangement simultaneously. In this way, the individual components of the aforementioned assembly can be fixed onto one another which substantially simplifies their handling.

Particularly advantageous is an embodiment, in which the PTC heating elements are configured as identical parts. This means that the PTC heating elements are identical and can be interchanged. By using identical parts, the quantities can be increased and thus the production costs reduced.

It is conceivable, furthermore, to radially support the PTC heating elements in each case on the heat exchanger via a heat conducting foil. Because of this, an areal contacting between the PTC heating elements and the heat exchanger is achieved which improves the heat transfer. Practically, the heat conducting foil can be configured electrically conductively so that the heat exchanger can form the second pole for the power connection. For example, such a heat conducting foil can be formed by a carbon foil.

A fuel injection system according to the invention, which is employed in the case of an internal combustion engine for the fuel supply, can be equipped with a common distributor line for the fuel, a so-called common rail system. Furthermore, a plurality of injectors for injecting fuel can be provided in the cylinder of the internal combustion engine. Apart from this, the fuel injection system is equipped with a plurality of fuel heating devices of the type described above. The distributor line is fluidically connected to the inlet openings of the fuel heating devices and each injector is fluidically connected to the outlet opening of such a fuel heating device in each case. This means all injectors are each connected to the common distributor line via such a fuel heating device.

The fuel injection system in this case can comprise a carrier strip, which is fixedly connected to the housings of the fuel heating devices. Furthermore, this carrier strip can also be fixedly connected to the distributor line. The carrier strip can be configured for fastening to the internal combustion engine. Thus, the fuel injection system can be attached to the internal combustion engine with the help of the carrier strip.

Further important features and advantages of the invention are obtained from the subclaims, from the drawings and from the associated description of the figures by way of the drawings.

It is to be understood that the features mentioned above and still to be explained in the following cannot only be used in the respective combination stated but also in other combinations or by themselves without leaving the scope of the present invention.

Preferred exemplary embodiments of the invention are shown in the drawings and are explained in more detail in the following description, wherein identical reference characters relate to identical or similar or functionally identical components. In the drawings,
- Fig. 1: schematically shows an isometric view of a fuel injection system with a plurality of fuel heating devices,
- Fig. 2: schematically shows an isometric exploded representation of such a fuel heating device,
- Fig. 3: schematically shows a longitudinal section through the fuel heating device,
- Fig. 4: schematically shows a longitudinal section as in Fig. 3, however in another section plane,
- Fig. 5: schematically shows a cross section of the fuel heating device,
- Fig. 6: schematically shows an isometric view of a heat exchanger of the fuel heating device with another design.

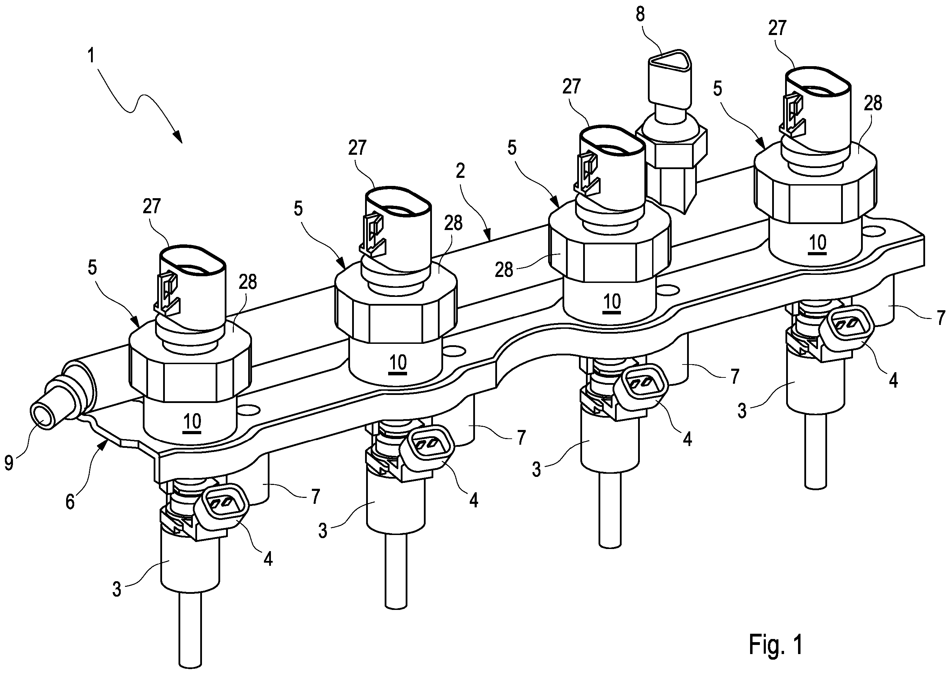

According to Fig. 1, a fuel injection system 1, which serves for the fuel supply of an internal combustion engine which is not shown here, has a common distributor line 2 for fuel. Furthermore, a plurality of injectors 3 for injecting the fuel, preferentially in cylinders of the internal combustion engine, is provided. These injectors 3 are supplied with fuel via the common distributor line 2 so that altogether a common rail system is present. Each injector 3 possesses an electrical injector connection 4, via which a power supply can be connected to the respective injector 3 and via which the respective injector 3 can be actuated, i.e. can be controlled for injecting the fuel.

Furthermore, the fuel injection system 1 is equipped with a plurality of fuel heating devices 5 which serve for heating up the fuel fed to the respective injector 3. Here, each injector 3 is assigned a separate fuel heating device 5. The fuel supply of the injectors 3 in this case is fed through the fuel heating devices 5. Accordingly, the respective fuel heating device 5 is preferentially directly connected to the common distributor line 2. Furthermore, each injector 3 is preferentially directly connected to the respective fuel heating device 5 and because of this only indirectly connected to the distributor line 2, namely via the respective fuel heating device 5.

The fuel injection system 1 is additionally equipped with a carrier strip 6, on which on one hand the fuel heating devices 5 and on the other hand the distributor line 2 are fixedly attached. The injectors 3 by contrast are each connected to one of the fuel heating devices 5. In this respect, the injectors 5 are only indirectly attached to the carrier strip 6 namely via the fuel heating devices 5. The carrier strip 6 is provided for fixing to the internal combustion engine. Noticeable are corresponding screw sleeves 7. The distributor line 2, typically, has a pressure sensor 8 and a fuel inlet 9.

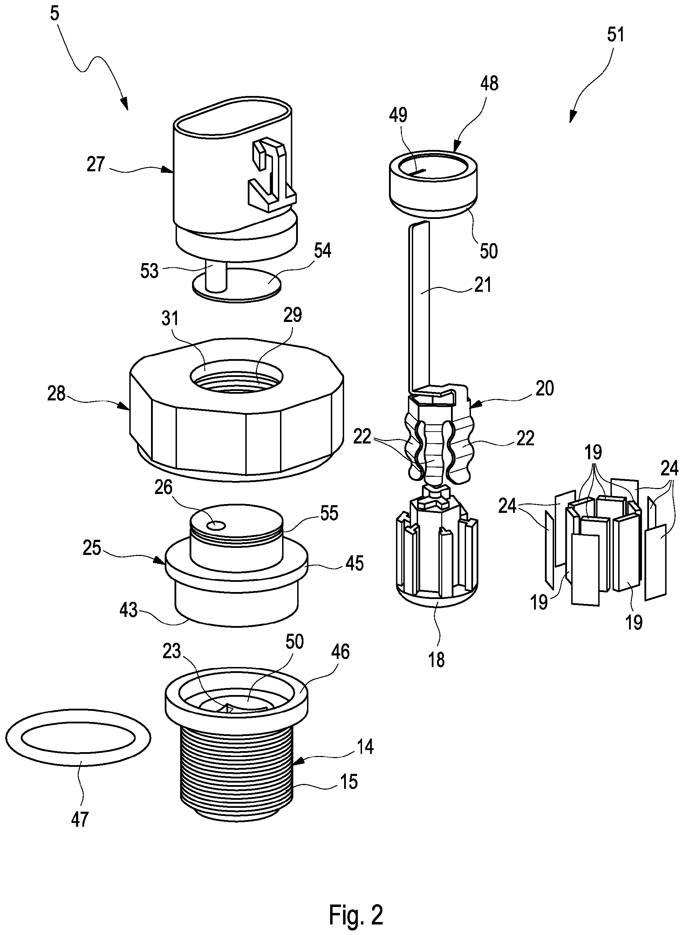

In the following, the structure of the fuel heating devices 5 is explained in more detail by way of Fig. 2 to 6, individual components of the respective fuel heating device 5 being noticeable also in Fig. 1.

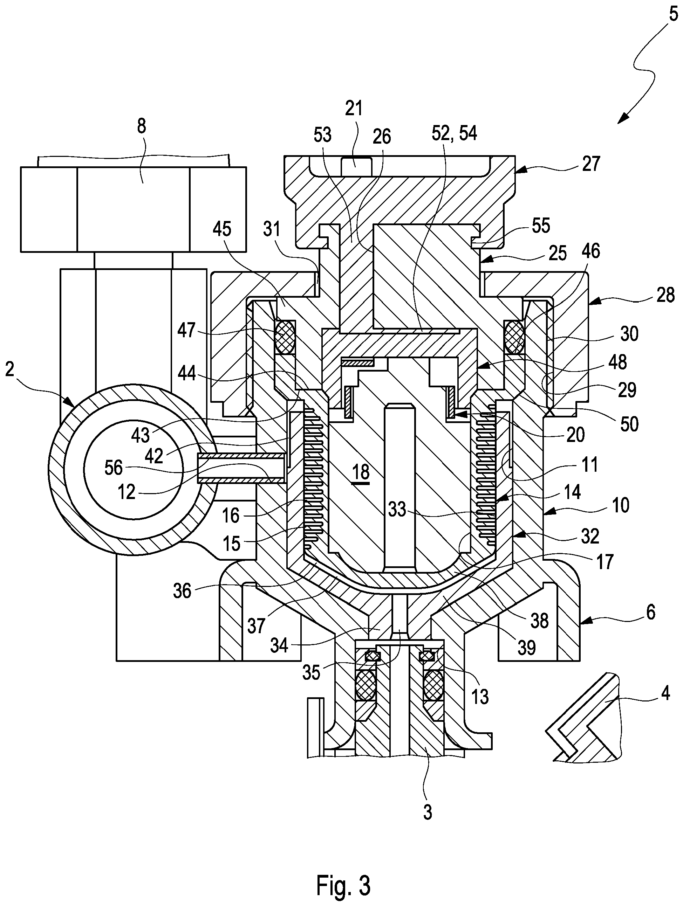

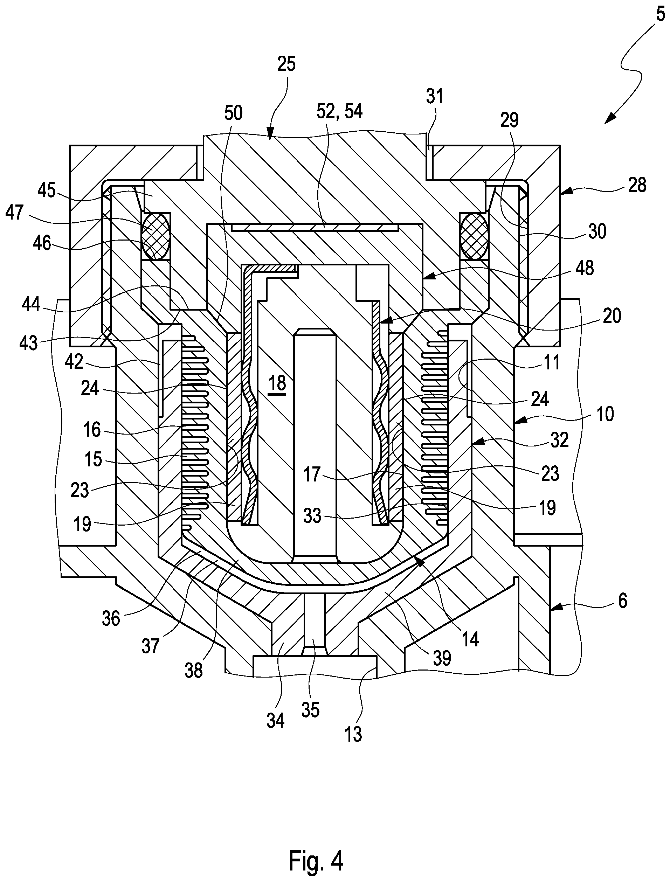

According to Fig. 1 to 6, the respective fuel heating device 5 comprises a housing 10, which is configured pot-shaped, in particular cylindrically and preferentially circular cylindrically. The housing 10 contains a housing interior 11, an inlet opening 12 for liquid fuel that is noticeable in Fig. 3 and an outlet opening 13 for liquid fuel that is noticeable in Fig. 3 and 4. The housing 10 can be fixedly connected to the aforementioned carrier strip 6, practically by a welded connection.

The fuel heating device 5 additionally has a heat exchanger 14, which is likewise configured pot-shaped, in particular cylindrically and preferentially circular cylindrically. The heat exchanger 14 is inserted into the housing interior 11. On its outside, the heat exchanger 14 has a plurality of fins 15. The fins 15 circulate for example in each case in the circumferential direction and are arranged adjacently to one another in the axial direction or in the longitudinal direction in each case, as a result of which fin intermediate spaces 16 are formed. The same applies also to a helically circumferential fin. The fins 15 serve for directly transferring heat into the fuel. In its interior, the heat exchanger 14 has an exchanger interior 17.

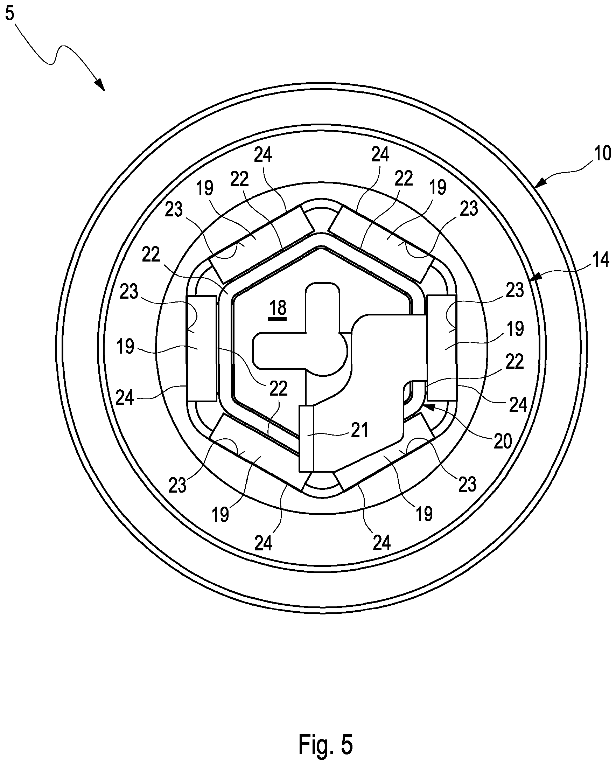

Furthermore, the fuel heating device 5 is equipped with a heating element carrier 18, which is inserted into the exchanger interior 17. This heating element carrier 18 on its outside carries at least two PTC heating elements 19. These PTC heating elements 19 are noticeable in the section of Fig. 4 and in the views of Fig. 2 and 5. The PTC heating elements 19 are configured flat and even. These are preferentially identical parts which are rectangular-shaped. Because of this, the PTC heating elements 19 can be produced particularly cost-effectively. The heating element carrier 18 additionally has a contact spring arrangement 20 which serves for preloading the PTC heating elements 19 against the heat exchanger 14 for the heat transfer. At the same time, the contact spring arrangement 20 forms a first pole for the power supply of the PTC heating elements 19. For the actual power connection, the contact spring arrangement 20 has a terminal lug 21. The contact spring arrangement 20 has a spring section 22 for each PTC heating element 19 for radially preloading the respective PTC heating element 19 against the heat exchanger 14. In the example introduced here, exactly six PTC heating elements 19 are provided, which are arranged evenly distributed in the circumferential direction. Because of this, a hexagonal cross section is realized. The heat exchanger 14 is formed complementarily to the number of the PTC heating elements 19 on its inside, which delimits the exchanger interior 17, so that the exchanger interior 17 in the shown example has a hexagonal inner cross section. Furthermore, the heat exchanger 14 on its inside has a heat exchanger surface 23 for each PTC heating element 19 that is complementary thereto, against which the respective PTC heating element 19 is preloaded with the help of the contact spring arrangement 20. Here, a direct contacting of the respective PTC heating element 19 with said heat exchanger surface 23 is conceivable in principle. Preferentially, however heat conducting foils 24 are employed here, via which the contacting takes place. Such a heat conducting foil 24 has a comparatively good heat conductivity and can, in addition, be practically configured electrically conductively. For example, carbon foils can be used as heat conducting foils 24. Because of this, the heat exchanger 14 can form the second pole for the power supply of the PTC heating elements 19. Practically, in this case the heat exchanger 14 forms the ground.

It is clear that in principle fewer but also more than six PTC heating elements 19 can be employed. Complementarily thereto, the heat exchanger 14 in its exchanger interior 17 can have a rectangular cross section in the case of two PTC heating elements 19, a triangular cross section in the case of three PTC elements, a square cross section in the case of four PTC elements, a pentagonal cross section in the case of five PTC heating elements or an octagonal cross section in the case of eight PTC heating elements 19 and so forth.

According to Fig. 2 to 4, the fuel heating device 5 additionally has an exchanger lid 25, which serves for axially closing the exchanger interior 17. The terminal lug 21 is axially fed through this exchanger lid 25. To this end, the exchanger lid 25 according to Fig. 2 possesses a passage opening 26.

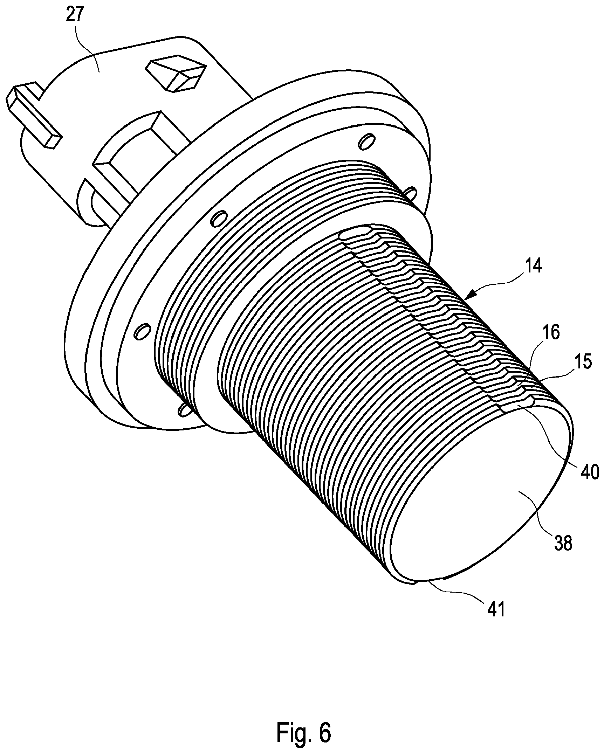

Furthermore, the fuel heating device 5 is equipped with an electrical connection 27, which is also noticeable in Fig. 1 and 6. The terminal lug 21 projects into this electrical connection 27 in a freestanding manner. Accordingly, the electrical connection 27 serves for the electrical power supply of the respective fuel heating device 5. In other words, the fuel heating device 5 can be connected to a corresponding power supply via the respective electrical connection 27. By way of the electrical connection 27, the respective fuel heating devices can be activated for heating the fuel.

The fuel heating device 5 is additionally equipped with a housing lid 28, which serves for axially closing the housing 10 and which is screwed to the housing 10. To this end, the housing lid 28 possesses an internal thread 29, which can be screwed onto an external thread 30 that is complementary thereto and is formed on the housing 10. The housing lid 28 possesses a central passage opening 31, through which the exchanger lid 25 is axially fed through.

According to Fig. 3 and 4, in the housing interior 11 a pot-shaped insulator 32 can be additionally arranged, which has a thermally insulating effect and contains an insulator interior 33. The heat exchanger 14 is inserted in the insulator 32 or its insulator interior 33. The insulator 32 in this case is dimensioned so that it lies against the inside of the housing 10 with its outside at least partly directly, while with its inside it lies against the outside of the heat exchanger 14 at least partly directly. Here, the insulator 32 lies against the radially freestanding outer margins or end edges of the fins 15. Furthermore, the insulator 32 is equipped with a projection 34 here, which extends as far as into the outlet opening 13 of the housing 10. In this projection 34, an outlet duct 35 is formed. This outlet duct 35 creates a fluidic connection between a heating space 36 and the outlet opening 13. In the heating space 36, the heating of the fuel takes place. In particular the fins 15 are arranged in the heating space 36. The volume of the heating space 36 in this case is substantially formed by the fin intermediate spaces 16.

The heating space 36 can additionally have a gap 37, which is axially formed between an exchanger bottom 38 of the heat exchanger 14 and an insulator bottom 39 of the insulator 32. The outlet duct 35 leads into this gap 37.

According to Fig. 6, the heat exchanger 14 can comprise at least one longitudinal groove 40 on its outside, i.e. in the region of a fin 15, which in the following can also be referred to as outlet groove 40 or collector groove 40. By way of this outlet groove 40 or collector groove 40, the fin intermediate spaces 16 are fluidically connected to the aforementioned gap 37, into which the outlet duct 35 leads. Accordingly, fuel from the fin intermediate spaces 16 can collect in this collector groove 40 and therein flow to the gap 37. Practically, the heat exchanger 14 according to Fig. 6 can likewise have a further longitudinal groove 41 on its outside, practically in the region of its fins 15, which can be referred to as inlet groove 41 or as distributor groove 41 in the following. This inlet groove 41 or distributor groove 41 is practically positioned so that it is fluidically in connection with the inlet opening 12. Accordingly, fuel which flows into the distributor groove 41 via the inlet opening 12 can be spread in the distributor groove 41 to the individual fin intermediate spaces 16. Practically, distributor groove 41 and collector groove 40 lie diametrically opposite one another on the circumference of the heat exchanger 14. The radial depth of the respective longitudinal groove 40, 41 in this case is practically smaller than a radial height of the fins 15.

According to Fig. 3, the inlet opening 12 is formed laterally or radially on the housing 10. The insulator 32 defines a ring gap 42 in an end region that is distant from the outlet opening 13, through which the fuel flows at an inlet end of the distributor groove 41 that is distant from the outlet opening 13.

According to Fig. 3 and 4, the exchanger lid 25 is axially inserted into the heat exchanger 14. The exchanger lid 25 has an axial front side 43, which is axially supported on an annular step 44, which is formed on the heat exchanger 14. The exchanger lid 25 additionally has a radially projecting collar 45 circulating in the circumferential direction. Axially between this collar 45 and an axial front side 46 of the heat exchanger 14, a ring seal 47, preferentially an O-ring is arranged. The ring seal 47 radially supports itself on the housing 10 and on the exchanger lid 25.

According to Fig. 2 to 4, the fuel heating device 5 shown here is additionally equipped with a covering cap 48, which is arranged in the heat exchanger 14 and which axially covers the heating element carrier 18, the contact spring arrangement 20 and the PTC heating elements 19. The terminal lug 21 is axially fed through the covering cap 48. The same has a suitably formed slit 49 for this purpose. Furthermore, the covering cap 48 is axially supported on the exchanger lid 25. Furthermore, the covering cap 48 can be supported on the heat exchanger 14 via a cone 50.

Practically, the covering cap 48, the electrical connection 27 and the heating element carrier 18 consist of plastic. In contrast with this, the heat exchanger 14, the housing 10, the exchanger lid 25 and the housing lid 28 can practically consist of metal. It is clear, that depending on functionality, different plastics or plastic compounds and/or different metals or metal alloys can be employed here.

According to Fig. 3, the housing lid 28 can be captively and moveably arranged axially between the electrical connection 27 and the exchanger lid 25. The housing lid 28 in this case is axially adjustably and rotatably arranged. In particular, a preassemblable assembly 51 can thereby be particularly easily realized, which comprises all of the components of the fuel heating device 5 except for the housing 10 and the insulator 32. In particular, Fig. 2 thus shows this assembly 51 in an exploded representation. The assembly 51 thus comprises the heat exchanger 14, the heating element carrier 18 with the heating elements 19 and if appropriate the heat conducting foils 24. Furthermore, the assembly 51 comprises the contact spring arrangement 20, if appropriate the covering cap 48, the exchanger lid 25, the housing lid 28, the electrical connection 27 and if appropriate the ring seal 47.

The degree of integration of this assembly 51 can be increased in particular in that the electrical connection 27 consists of plastic and is injection moulded onto the metallic exchanger lid 25. By way of this injection moulding operation, the passage opening 26 in particular is filled out with the plastic of the electrical connection 27, the terminal lug 21 being enclosed there. Because of this, the terminal lug 21 is electrically insulated relative to the exchanger lid 25. At the same time, an intermediate space 52 axially formed between the exchanger lid 25 and the covering cap 48 can be filled out with the plastic of the electrical connection 27 while injection moulding-on the electrical connection 27. In Fig. 2 and 3, a region of the electrical connection 27 filling out a passage opening 26 of the exchanger lid 25, is designated 53. In Fig. 2 to 3, a region of the electrical connection 27 filling out the intermediate space 52 is designated 54. Practically, the electrical connection 27 is injection moulded on when the housing lid 28 is already placed onto the exchanger lid 25. Furthermore, injection moulding-on of the electrical connection 27 practically takes place in particular when the terminal lug 21 of the contact spring arrangement 20 has also been fed through the exchanger lid 25. Thus, the electrical connection 27 is practically injection moulded onto the exchanger lid 25 and onto the terminal lug 21 in particular when the aforementioned assembly 51 has already been assembled except for the electrical connection 27.

By way of a press fit in the plug connection between heat exchanger 14 and exchanger lid 25, the heat exchanger 14 is fixed on the exchanger lid 25 and thus on the remaining assembly 51. Furthermore, the assembly 21 is easily handleable because of this and easily insertable into the housing 10, into which the insulator 32 has been inserted beforehand.

For an improved mechanical connection between the injection moulded electrical connection 27 and the exchanger lid 25, the exchanger lid 25 can have a circumferential ring groove 55, in which the plastic of the electrical connection 27 enters.

In Fig. 3 it is evident how the associated injector 3 is directly inserted into the outlet opening 13 of the housing 10 so that the fuel heated with the help of the fuel heating device 5 can be directly fed to the associated injector 3. In Fig. 3 it is evident, furthermore, how the inlet opening 12 of the housing 10 is fluidically connected to the distributor line 2 via a connecting tube 56.

## Claims

1. Fuel heating device (5) for a fuel injection system (1) of an internal combustion engine,
- having a pot-shaped housing (10), which has a housing interior (11), an inlet opening (12) for liquid fuel and an outlet opening (13) for liquid fuel,
- having a pot-shaped heat exchanger (14), which is inserted into the housing interior (11),
- having a heating element carrier (18), which is inserted into the exchanger interior (17), which on the outside carries at least two flat and even PTC heating elements (19) and which has a contact spring arrangement (20), which preloads the PTC heating elements (19) against the heat exchanger (14) for the heat transfer and forms a pole for the power supply of the PTC heating elements (19),
- having an exchanger lid (25) for axially closing the exchanger interior (17), through which a terminal lug (21) of the contact spring arrangement (20) is axially fed through,
- having an electrical connection (27), which is attached to the exchanger lid (25), via which the fuel heating device (5) can be connected to a power supply and into which the terminal lug (21) projects,
- having a housing lid (28) for axially closing the housing (10), through which the exchanger lid (25) is axially fed through,
**characterized in**
- **that** heat exchanger (14) on the outside has fins (15) for directly transferring heat into the fuel and which on the inside has an exchanger interior (17),
- **that** the housing lid (28) is screwed to the housing (10),
- **that** in the housing interior (11) a pot-shaped thermally insulating insulator (32) is additionally arranged, into which the heat exchanger (14) is inserted, which on the outside lies against the housing (10) and which on the inside lies against the heat exchanger (14).

2. Fuel heating device according to Claim 1, **characterized in that** the insulator (32) with a projection (34) extends as far as into the outlet opening (13) of the housing (10) and in the projection (34) contains an outlet duct (35), through which a heating space (36), in which the fins (15) of the heat exchanger (14) are located, is fluidically connected to the outlet opening (13).

3. Fuel heating device according to Claim 1 or 2, **characterized in that** axially between an exchanger bottom (38) of the pot-shaped heat exchanger (14) and an insulator bottom (39) of the pot-shaped insulator (32) a gap (37) is formed.

4. Fuel heating device according to Claim 3, **characterized in that** outside on the heat exchanger (14) at least one longitudinal groove (40) is formed, which is fluidically connected to the gap (37), so that fuel from fin intermediate spaces (16) can collect in the longitudinal groove (40) and flow to the gap (37).

5. Fuel heating device according to any one of Claims 1 to 4, **characterized in that** outside on the heat exchanger (14) at least one longitudinal groove (41) is formed, which is fluidically connected to the inlet opening (12), so that fuel from the longitudinal groove (41) can spread to fin intermediate spaces (16).

6. Fuel heating device according to any one of Claims 1 to 5, **characterized**
- **in that** the exchanger lid (25) is axially inserted into the heat exchanger (14),
- **in that** the exchanger lid (25) has an axial front side (43), which is axially supported on an annular step (44) formed on the heat exchanger (14),
- **in that** the exchanger lid (25) has a radially projecting collar (45) circulating in the circumferential direction,
- **in that** axially between the collar (45) of the exchanger lid (25) and an axial front side (46) of the heat exchanger (14) a ring seal (47) is arranged, which radially supports itself on the housing (10).

7. Fuel heating device according to any one of Claims 1 to 6, **characterized**
- **in that** in or on the heat exchanger (14) a covering cap (48) is arranged, which axially covers the heating element carrier (18), the contact spring arrangement (20) and the PTC heating elements (19),
- **in that** the terminal lug (21) is axially fed through the covering cap (48),
- **in that** the covering cap (48) is axially supported on the exchanger lid (25).

8. Fuel heating device according to Claim 7, **characterized in that** the covering cap (48) is supported on the heat exchanger (14) via a cone (50).

9. Fuel heating device according to Claim 7 or 8, **characterized**
- **in that** the covering cap (48), the electrical connection (27) and the heating element carrier (18) are separate components and consist of plastic,
- **in that** the heat exchanger (14), the housing (10), the exchanger lid (25) and the housing lid (28) are separate components and consist of metal.

10. Fuel heating device according to any one of Claims 1 to 9, **characterized in that** the housing lid (28) is captively and moveably arranged axially between the electrical connection (27) and the exchanger lid (25).

11. Fuel heating device according to any one of Claims 1 to 10, **characterized in that** the electrical connection (27) consists of plastic and is injection moulded onto the metallic exchanger lid (25).

12. Fuel heating device according to any one of Claims 1 to 11, **characterized in that** the PTC heating elements (19) are identical parts.

13. Fuel heating device according to any one of Claims 1 to 12, **characterized in that** the PTC heating elements (19) are in each case radially supported on the heat exchanger (14) via a heat conducting foil (24).

14. Fuel injection system (1) for an internal combustion engine,
- having a common distributor line (2) for fuel,
- having a plurality of injectors (3) for injecting fuel,
- having a plurality of fuel heating devices (5) according to any one of Claims 1 to 13,
- the fuel heating devices (5) each being fluidically connected to the distributor line (2),
- the injectors (3) each being fluidically connected to one of the fuel heating devices (5).

## Patentansprüche

1. Kraftstoffheizvorrichtung (5) für eine Kraftstoffeinspritzanlage (1) für eine Brennkraftmaschine,
- aufweisend ein topfförmiges Gehäuse (10), das ein Gehäuseinneres (11), eine Einlassöffnung (12) für flüssigen Kraftstoff und eine Auslassöffnung (13) für flüssigen Kraftstoff aufweist,
- aufweisend einen topfförmigen Wärmetauscher (14), der in das Gehäuseinnere (11) eingesetzt ist,
- aufweisend einen Heizelementträger (18), der in das Wärmetauscherinnere (17) eingesetzt ist, der an der Außenseite mindestens zwei plane und ebene PTC-Heizelemente (19) trägt und der eine Kontaktfederanordnung (20) aufweist, die die PTC-Heizelemente (19) für die Wärmeübertragung gegen den Wärmetauscher (14) vorspannt und einen Pol für die Stromversorgung der PTC Heizelemente (19) bildet,
- aufweisend einen Wärmetauscherdeckel (25) zum axialen Schließen des Wärmetauscherinneren (17), durch den eine Anschlusslasche (21) der Kontaktfederanordnung (20) axial durchgeführt ist,
- aufweisend einen elektrischen Anschluss (27), die an dem Wärmetauscherdeckel (25) befestigt ist, über die die Kraftstoffheizvorrichtung (5) mit einer Stromversorgung verbunden werden kann und in die die Anschlusslasche (21) vorsteht,
- aufweisend einen Gehäusedeckel (28) zum axialen Schließen des Gehäuses (10), durch den der Wärmetauscherdeckel (25) axial durchgeführt ist,
**dadurch gekennzeichnet,**
- **dass** der Wärmetauscher (14) an der Außenseite zum direkten Übertragen von Wärme an den Kraftstoff Rippen (15) aufweist und an der Innenseite ein Wärmetauscherinneres (17) aufweist,
- **dass** der Gehäusedeckel (28) an das Gehäuse (10) angeschraubt ist,
- **dass** in dem Gehäuseinneren (11) zusätzlich ein topfförmiger thermisch isolierender Isolator (32) angeordnet ist, in den der Wärmetauscher (14) eingesetzt ist, der an der Außenseite an dem Gehäuse (10) anliegt und der an der Innenseite an dem Wärmetauscher (14) anliegt.

2. Kraftstoffheizvorrichtung nach Anspruch 1, **dadurch gekennzeichnet, dass** sich der Isolator (32) mit einem Vorsprung (34) bis in die Auslassöffnung (13) des Gehäuses (10) erstreckt, und dass der Vorsprung (34) eine Auslassleitung (35) enthält, durch die ein Heizraum (36), in dem die Rippen (15) des Wärmetauschers (14) positioniert sind, fluidmäßig mit der Auslassöffnung (13) verbunden ist.

3. Kraftstoffheizvorrichtung nach Anspruch 1 oder 2, **dadurch gekennzeichnet, dass** axial zwischen einem Wärmetauscherboden (38) des topfförmigen Wärmetauschers (14) und einem Isolatorboden (39) des topfförmigen Isolators (32) ein Spalt (37) gebildet ist.

4. Kraftstoffheizvorrichtung nach Anspruch 3, **dadurch gekennzeichnet, dass** außen an dem Wärmetauscher (14) mindestens eine Längsrille (40) gebildet ist, die fluidmäßig so mit dem Spalt (37) verbunden ist, dass Kraftstoff von Rippenzwischenräumen (16) in der Längsrille (40) aufgefangen werden und zu dem Spalt (37) fließen kann.

5. Kraftstoffheizvorrichtung nach einem der Ansprüche 1 bis 4, **dadurch gekennzeichnet, dass** außen an dem Wärmetauscher (14) mindestens eine Längsrille (41) gebildet ist, die fluidmäßig so mit der Einlassöffnung (12) verbunden ist, dass Kraftstoff aus der Längsrille (41) auf die Rippenzwischenräume (16) verteilt werden kann.

6. Kraftstoffheizvorrichtung nach einem der Ansprüche 1 bis 5, **dadurch gekennzeichnet,**
- **dass** der Wärmetauscherdeckel (25) axial in den Wärmetauscher (14) eingesetzt ist,
- **dass** der Wärmetauscherdeckel (25) eine axiale Stirnseite (43) aufweist, die axial auf einer die auf dem Wärmetauscher (14) gebildeten ringförmigen Stufe (44) gestützt ist,
- **dass** der Wärmetauscherdeckel (25) einen radial vorstehenden Kragen (45) aufweist, der in Umfangsrichtung kreist,
- **dass** axial zwischen dem Kragen (45) des Wärmetauscherdeckels (25) und einer axialen Stirnseite (46) des Wärmetauschers (14) eine Ringdichtung (47) angeordnet ist, die sich selber radial auf dem Gehäuse (10) stützt.

7. Kraftstoffheizvorrichtung nach einem der Ansprüche 1 bis 6, **dadurch gekennzeichnet,**
- **dass** auf dem Wärmetauscher (14) eine Abdeckkappe (48) angeordnet ist, die axial den Heizelementträger (18), die Kontaktfederanordnung (20) und die PTC-Heizelemente (19) abdeckt,
- **dass** die Anschlusslasche (21) axial durch die Abdeckkappe (48) durchgeführt ist,
- **dass** die Abdeckkappe (48) axial auf dem Wärmetauscherdeckel (25) gestützt ist.

8. Kraftstoffheizvorrichtung nach Anspruch 7, **dadurch gekennzeichnet, dass** die Abdeckkappe (48) auf dem Wärmetauscher (14) über einen Kegel (50) gestützt ist.

9. Kraftstoffheizvorrichtung nach Anspruch 7 oder 8, **dadurch gekennzeichnet**
- **dass** die Abdeckkappe (48), der elektrische Anschluss (27) und der Heizelementträger (18) getrennte Bauteile sind und aus Kunststoff bestehen,
- **dass** der Wärmetauscher (14), das Gehäuse (10), der Wärmetauscherdeckel (25) und der Gehäusedeckel (28) getrennte Bauteile sind und aus Metall bestehen.

10. Kraftstoffheizvorrichtung nach einem der Ansprüche 1 bis 9, **dadurch gekennzeichnet, dass** der Gehäusedeckel (28) unverlierbar und beweglich axial zwischen dem elektrischen Anschluss (27) und dem Wärmetauscherdeckel (25) angeordnet ist.

11. Kraftstoffheizvorrichtung nach einem der Ansprüche 1 bis 10, **dadurch gekennzeichnet, dass** der elektrische Anschluss (27) aus Kunststoff besteht und auf dem metallischen Wärmetauscherdeckel (25) spritzgegossen ist.

12. Kraftstoffheizvorrichtung nach einem der Ansprüche 1 bis 11, **dadurch gekennzeichnet, dass** die PTC-Heizelemente (19) identische Teile sind.

13. Kraftstoffheizvorrichtung nach einem der Ansprüche 1 bis 12, **dadurch gekennzeichnet, dass** die PTC-Heizelemente (19) in jedem Fall radial auf dem Wärmetauscher (14) über eine wärmeleitende Folie (24) gestützt sind.

14. Kraftstoffeinspritzanlage (1) für eine Brennkraftmaschine,
- aufweisend eine gemeinsame Verteilerleitung (2) für Kraftstoff,
- aufweisend eine Vielzahl von Injektoren (3) zum Einspritzen von Kraftstoff,
- aufweisend eine Vielzahl von Kraftstoffheizvorrichtungen (5) nach einem der Ansprüche 1 bis 13,
- wobei jede der Kraftstoffheizvorrichtungen (5) fluidmäßig mit der Verteilerleitung (2) verbunden ist,
- wobei jeder der Injektoren (3) fluidmäßig mit einer der Kraftstoffheizvorrichtungen (5) verbunden ist.

## Revendications

1. Dispositif de chauffage de carburant (5) pour un système d'injection de carburant (1) d'un moteur à combustion interne,
- présentant un logement en forme de pot (10), qui présente un intérieur de logement (11), une ouverture d'admission (12) pour du carburant liquide et une ouverture de sortie (13) pour du carburant liquide,
- présentant un échangeur de chaleur en forme de pot (14), qui est inséré dans l'intérieur de logement (11),
- présentant un support d'élément chauffant (18), qui est inséré dans l'intérieur d'échangeur (17), qui sur l'extérieur porte au moins deux éléments chauffants plats et égaux PTC (19) et qui présente un agencement de ressort de contact (20), qui précharge les éléments chauffants PTC (19) contre l'échangeur de chaleur (14) pour le transfert de chaleur et forme un pôle pour l'alimentation en énergie des éléments chauffants PTC (19),
- présentant un couvercle d'échangeur (25) pour fermer de façon axiale l'intérieur d'échangeur (17), par lequel une cosse terminale (21) de l'agencement de ressort de contact (20) est amenée à travers de façon axiale,
- présentant une connexion électrique (27), qui est attachée au couvercle d'échangeur (25), via laquelle le dispositif de chauffage de carburant (5) peut être connecté à une alimentation en énergie et dans laquelle la cosse terminale (21) dépasse,
- présentant un couvercle de logement (28) pour fermer de façon axiale le logement (10), à travers lequel le couvercle d'échangeur (25) est amené de façon axiale, **caractérisé**
- **en ce que** l'échangeur de chaleur (14) sur l'extérieur comporte des ailettes (15) pour directement transférer de la chaleur dans le carburant et qui sur l'intérieur comporte un intérieur d'échangeur (17),
- **en ce que** le couvercle de logement (28) est vissé sur le logement (10),
- **en ce que** dans l'intérieur de logement (11) un isolateur en forme de pot thermiquement isolant (32) est de plus agencé, dans lequel l'échangeur de chaleur (14) est inséré, qui sur l'extérieur repose contre le logement (10) et qui sur l'intérieur repose contre l'échangeur de chaleur (14).

2. Dispositif de chauffage de carburant selon la revendication 1, **caractérisé en ce que** l'isolateur (32) avec une partie en saillie (34) s'étend autant que dans l'ouverture de sortie (13) du logement (10) et dans la partie en saillie (34) contient un conduit de sortie (35), à travers lequel un espace de chauffage (36), dans lequel les ailettes (15) de l'échangeur de chaleur (14) sont situées, est relié en communication par fluide à l'ouverture de sortie (13).

3. Dispositif de chauffage de carburant selon la revendication 1 ou 2, **caractérisé en ce que** de façon axiale entre un fond d'échangeur (38) de l'échangeur de chaleur en forme de pot (14) et un fond d'isolateur (39) de l'isolateur en forme de pot (32) un espacement (37) est formé.

4. Dispositif de chauffage de carburant selon la revendication 3, **caractérisé en ce qu'**à l'extérieur sur l'échangeur de chaleur (14) au moins une rainure longitudinale (40) est formée, qui est reliée en communication par fluide à l'espacement (37), de sorte que du carburant provenant d'espaces intermédiaires d'ailette (16) peut se rassembler dans la rainure longitudinale (40) et s'écouler jusqu'à l'espacement (37).

5. Dispositif de chauffage de carburant selon l'une quelconque des revendications 1 à 4, **caractérisé en ce qu'**à l'extérieur sur l'échangeur de chaleur (14) au moins une rainure longitudinale (41) est formée, qui est reliée en communication par fluide à l'ouverture d'admission (12), de sorte que du carburant provenant de la rainure longitudinale (41) peut s'étendre jusqu'à des espaces intermédiaires d'ailette (16).

6. Dispositif de chauffage de carburant selon l'une quelconque des revendications 1 à 5, **caractérisé**
- **en ce que** le couvercle d'échangeur (25) est inséré de façon axiale dans l'échangeur de chaleur (14),
- **en ce que** le couvercle d'échangeur (25) présente un côté avant axial (43), qui est supporté de façon axiale sur un échelon annulaire (44) formé sur l'échangeur de chaleur (14),
- **en ce que** le couvercle d'échangeur (25) comporte un col (45) en saillie de façon radiale circulant dans la direction circonférentielle,
- **en ce que** de façon axiale entre le col (45) du couvercle d'échangeur (25) et un côté avant axial (46) de l'échangeur de chaleur (14) un joint torique (47) est agencé, qui se supporte de façon radiale sur le logement (10).

7. Dispositif de chauffage de carburant selon l'une quelconque des revendications 1 à 6, **caractérisé**
- **en ce que** dans ou sur l'échangeur de chaleur (14) un chapeau de couverture (48) est agencé, qui couvre de façon axiale le support d'élément chauffant (18), l'agencement de ressort de contact (20) et les éléments chauffants PTC (19),
- **en ce que** la cosse terminale (21) est amenée de façon axiale à travers le chapeau de couverture (48),
- **en ce que** le chapeau de couverture (48) est supporté de façon axiale sur le couvercle d'échangeur (25).

8. Dispositif de chauffage de carburant selon la revendication 7, **caractérisé en ce que** le chapeau de couverture (48) est supporté sur l'échangeur de chaleur (14) via un cône (50).

9. Dispositif de chauffage de carburant selon la revendication 7 ou 8, **caractérisé**
- **en ce que** le chapeau de couverture (48), la connexion électrique (27) et le support d'élément chauffant (18) sont des composants distincts et constitués de plastique,
- **en ce que** l'échangeur de chaleur (14), le logement (10), le couvercle d'échangeur (25) et le couvercle de logement (28) sont des composants distincts et constitués de métal.

10. Dispositif de chauffage de carburant selon l'une quelconque des revendications 1 à 9, **caractérisé en ce que** le couvercle de logement (28) est de manière captive et de manière mobile agencé de façon axiale entre la connexion électrique (27) et le couvercle d'échangeur (25).

11. Dispositif de chauffage de carburant selon l'une quelconque des revendications 1 à 10, **caractérisé en ce que** la connexion électrique (27) est constituée de plastique et est moulée par injection sur le couvercle d'échangeur métallique (25).

12. Dispositif de chauffage de carburant selon l'une quelconque des revendications 1 à 11, **caractérisé en ce que** les éléments chauffants PTC (19) sont des parties identiques.

13. Dispositif de chauffage de carburant selon l'une quelconque des revendications 1 à 12, **caractérisé en ce que** les éléments chauffants PTC (19) sont dans chaque cas supportés de façon radiale sur l'échangeur de chaleur (14) via une tôle conductrice de chaleur (24).

14. Système d'injection de carburant (1) pour un moteur à combustion interne,
- présentant une ligne de distribution commune (2) pour carburant,
- présentant une pluralité d'injecteurs (3) pour injecter du carburant,
- présentant une pluralité de dispositifs de chauffage de carburant (5) selon l'une quelconque des revendications 1 à 13,
- les dispositifs de chauffage de carburant (5) étant chacun reliés en communication par fluide à la ligne de distribution (2),
- les injecteurs (3) étant chacun reliés en communication par fluide à l'un des dispositifs de chauffage de carburant (5).
